**Europäisches Patentamt**

**European Patent Office**

**Office européen des brevets**

(19)

(11) **EP 1 273 497 A2**

(12) **EUROPÄISCHE PATENTANMELDUNG**

(43) Veröffentlichungstag:
**08.01.2003 Patentblatt 2003/02**

(51) Int Cl.⁷: **B60T 8/88**

(21) Anmeldenummer: **02012520.9**

(22) Anmeldetag: **05.06.2002**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **02.07.2001 DE 10131573**

(71) Anmelder: **ROBERT BOSCH GMBH**
**70442 Stuttgart (DE)**

(72) Erfinder: **Miller, Norbert**
**70372 Stuttgart (DE)**

(54) **Verfahren zum Schutz eines Steuergeräts eines Kraftfahrzeugs vor Manipulation**

(57)     Die Erfindung betrifft ein Verfahren zum Schutz eines Steuergeräts (1) eines Kraftfahrzeugs vor Manipulation. Das Steuergerät (1) wird zur Steuerung und/ oder Regelung von Kraftfahrzeugfunktionen in Abhängigkeit von mindestens einer Betriebsgröße (2) des Kraftfahrzeugs eingesetzt. Das Verfahren dient zum Schutz mindestens einer der Betriebsgrößen (2) vor Manipulation. Um eine Manipulation der Betriebsgrößen (2) zu verhindern, wird vorgeschlagen, dass die mindestens eine der Betriebsgrößen (2) unter Verwendung mindestens einer weiteren Betriebsgröße (7) des Kraftfahrzeugs während des Betriebs des Kraftfahrzeugs einer Plausibilitätsprüfung unterzogen wird. Insbesondere wird vorgeschlagen, dass ein Geschwindigkeitssignal (V_ist) unter Verwendung eines Drehzahlsignals (n_m) einer Brennkraftmaschine des Kraftfahrzeugs und eines aktuellen Übersetzungsverhältnisses (i_G) eines Getriebes des Kraftfahrzeugs während des Betriebs des Kraftfahrzeugs der Plausibilitätsprüfung unterzogen wird.

**Fig. 1**

EP 1 273 497 A2

## Beschreibung

Die vorliegende Erfindung betrifft ein Verfahren zum Schutz eines Steuergeräts eines Kraftfahrzeugs vor Manipulation. Das Steuergerät wird zur Steuerung und/oder Regelung von Kraftfahrzeugfunktionen in Abhängigkeit von mindestens einer Betriebsgröße des Kraftfahrzeugs eingesetzt. Das Verfahren dient zum Schutz des Steuergeräts vor einer Manipulation mindestens einer der Betriebsgrößen.

Die Erfindung betrifft des weiteren ein Speicherelement für ein Steuergerät eines Kraftfahrzeugs zur Steuerung und/oder Regelung von Kraftfahrzeugfunktionen. Auf dem Speicherelement ist ein Computerprogramm abgespeichert, das auf einem Rechengerät des Steuergeräts, insbesondere auf einem Mikroprozessor, ablauffähig ist. Das Speicherelement ist bspw. als ein Read-Only-Memory, als ein Random-Access-Memory oder als ein Flash-Memory ausgebildet.

Die vorliegende Erfindung betrifft außerdem ein Computerprogramm, das auf einem Rechengerät eines Steuergeräts, insbesondere auf einem Mikroprozessor, ablauffähig ist.

Schließlich betrifft die Erfindung auch ein Steuergerät eines Kraftfahrzeugs zur Steuerung und/oder Regelung von Kraftfahrzeugfunktionen in Abhängigkeit von mindestens einer Betriebsgröße des Kraftfahrzeugs. Das Steuergerät weist Mittel zum Schutz des Steuergeräts vor Manipulation auf.

Stand der Technik

Aus dem Stand der Technik ist es bekannt, bei Kraftfahrzeugen die maximal zulässige Höchstgeschwindigkeit dadurch zu begrenzen, dass ein Schwellwert für die maximal zulässige Höchstgeschwindigkeit in einer Speicheranordnung des Kraftfahrzeugs abgelegt ist und während des Betriebs des Kraftfahrzeugs in einem Steuergerät des Kraftfahrzeugs ein Vergleich des aktuellen Geschwindigkeitssignals mit dem Schwellwert durchgeführt wird. Falls das Geschwindigkeitssignal den Schwellwert überschreitet, werden geeignete Gegenmaßnahmen ergriffen, um die Geschwindigkeit des Kraftfahrzeugs zu verringern. Die Gegenmaßnahmen umfassen bspw. bei einer fremdgezündeten Brennkraftmaschine eine Veränderung der Zündung und/oder der Kraftstoffzufuhr und bei einer selbstzündenden Brennkraftmaschine eine Veränderung des Zeitpunktes der Kraftstoffzufuhr und der Menge des zugeführten Kraftstoffs.

Von unbefugten Dritten kann die Begrenzung der maximal zulässigen Höchstgeschwindigkeit umgangen werden, indem das Geschwindigkeitssignal derart manipuliert wird, dass es immer unterhalb des Schwellwerts bleibt. In dem Steuergerät kann somit ein Überschreiten des Schwellwerts durch das Geschwindigkeitssignal nie eintreten und eine tatsächliche Geschwindigkeit des Kraftfahrzeugs oberhalb des Schwellwerts nie erkannt werden. Ein Kraftfahrzeug mit einer ausreichend großen Leistung kann auf diese Weise eine eigentlich vorgesehene maximal zulässige Höchstgeschwindigkeit überschreiten.

Der vorliegenden Erfindung liegt deshalb die Aufgabe zugrunde, eine Manipulation von Betriebsgrößen, die einem Steuergerät eines Kraftfahrzeugs zugeführt werden, zu verhindern.

Zur Lösung dieser Aufgabe schlägt die Erfindung ausgehend von dem Verfahren der eingangs genannten Art vor, dass die mindestens eine der Betriebsgrößen unter Verwendung mindestens einer weiteren Betriebsgröße des Kraftfahrzeugs während des Betriebs des Kraftfahrzeugs einer Plausibilitätsprüfung unterzogen wird.

Vorteile der Erfindung

Gemäß der vorliegenden Erfindung werden die Betriebsgrößen also nicht unbesehen zur Realisierung einer Steuerung und/oder Regelung von Kraftfahrzeugfunktionen herangezogen. Sie werden vielmehr zunächst einer Plausibilitätsprüfung unterzogen. Zur Plausibilitätsprüfung der mindestens einen Betriebsgröße werden weitere Betriebsgrößen des Kraftfahrzeugs herangezogen. In einem Kraftfahrzeug gibt es eine Vielzahl von mehr oder weniger komplizierten Zusammenhängen zwischen verschiedenen Betriebsgrößen. So ist es bspw. denkbar, das Signal eines Querbeschleunigungssensors anhand des Signals eines Lenkwinkelsensors auf Plausibilität zu prüfen. Ähnliche Zusammenhänge, die für eine Plausibilitätsprüfung herangezogen werden können, bestehen bspw. zwischen der Fahrzeuggeschwindigkeit, der Bremskraft, dem von der Brennkraftmaschine abgegebenen Drehmoment und dem Signal eines Längsbeschleunigungssensors. Die Plausibilitätsprüfung wird während des Betriebs des Kraftfahrzeugs in vorgebbaren zeitlichen Abständen laufend durchgeführt.

Der Kern der vorliegenden Erfindung besteht also in der Überlegung, Eingangssignale eines Kraftfahrzeugsteuergeräts, die für eine Steuerung und/oder Regelung von Kraftfahrzeugfunktionen herangezogen werden, auf ihre Richtigkeit zu prüfen, um eine Manipulation der Stuerungs- und/oder Regelungsfunktion des Steuergeräts durch das Anlegen manipulierter Eingangssignale zu verhindern. Dadurch kann eine veränderte Wirkung oder gar ein Defekt der gesteuerten oder geregelten Funktion vermieden werden. Die Detektion eines manipulierten Eingangssignals kann in einem Schadensfall außerdem zur Klärung von Gewährleistungsansprüchen herangezogen werden.

Gemäß einer vorteilhaften Weiterbildung der vorliegenden Erfindung wird vorgeschlagen, dass ein Geschwindigkeitssignal unter Verwendung eines Drehzahlsignals einer Brennkraftmaschine des Kraftfahrzeugs und eines aktuellen Übersetzungsverhältnisses eines Getriebes des Kraftfahrzeugs während des Betriebs des Kraftfahrzeugs der Plausibilitätsprüfung unterzogen wird. Unter Übersetzungsverhältnis im Sinne der vorliegenden Erfindung wird auch ein Übersetzungsverhältnis von kleiner 1, also ein Untersetzungsverhältnis verstanden. Gemäß dieser Weiterbildung wird die Erfindung also zur Detektion der Manipulation eines Geschwindigkeitssignals herangezogen. Dadurch kann verhindert werden, dass ein Kraftfahrzeug schneller als die für das Kraftfahrzeug maximal zulässige Höchstgeschwindigkeit fährt. Es besteht ein fester Zusammenhang zwischen der Fahrzeuggeschwindigkeit, der Motordrehzahl und dem Übersetzungsverhältnis des Getriebes. In Kenntnis zweier dieser Größen kann die Dritte mit hoher Genauigkeit ermittelt werden. Anhand der Motordrehzahl und dem Übersetzungsverhältnis kann eine Manipulation des Geschwindigkeitssignals mit hoher Zuverlässigkeit erkannt werden.

Gemäß einer bevorzugten Ausführungsform der vorliegenden Erfindung wird vorgeschlagen, dass das aktuelle Übersetzungsverhältnis anhand eines momentan eingelegten Gangs des Getriebes aus Applikationsdaten ermittelt wird, in denen die Übersetzungsverhältnisse für die Gänge des Getriebes abgelegt sind. Gemäß dieser Ausführungsform wird also in einem Handschaltgetriebe oder einem automatisierten Schaltgetriebe der momentan eingelegte Gang erfaßt und anhand von in einem Programmspeicher des Steuergeräts abgelegten Applikationsdaten das zu dem eingelegten Gang gehörende Übersetzungsverhältnis ermittelt.

Falls das Getriebe ein Getriebesteuergerät aufweist, wie dies bspw. bei Automatikgetrieben der Fall ist, wird vorgeschlagen, dass das aktuelle Übersetzungsverhältnis von dem Getriebesteuergerät an das Steuergerät zur Steuerung und/oder Regelung der Kraftfahrzeugfunktionen übermittelt wird. Es ist auch denkbar, dass das Getriebesteuergerät den eingelegten Gang oder die Abtriebsdrehzahl an das Steuergerät übermittelt und dieses dann aus dem eingelegten Gang anhand der Applikationsdaten das Übersetzungsverhältnis ermittelt.

Das aktuelle Übersetzungsverhältnis wird bei einem Automatikgetriebe vorzugsweise unter Berücksichtigung eines Wandlerschlupfes ermittelt. Die Plausibilitätsprüfung wird also zusätzlich abhängig von einer Wandlerüberbrückungskupplung durchgeführt.

Von besonderer Bedeutung ist die Realisierung des erfindungsgemäßen Verfahrens in der Form eines Speicherelements, das für ein Steuergerät eines Kraftfahrzeugs zur Steuerung und/oder Regelung von Kraftfahrzeugfunktionen vorgesehen ist. Dabei ist auf dem Speicherelement ein Computerprogramm abgespeichert, das auf einem Rechengerät des Steuergeräts, insbesondere auf einem Mikroprozessor, ablauffähig und zur Ausführung des erfindungsgemäßen Verfahrens geeignet ist. In diesem Fall wird also die Erfindung durch ein auf dem Speicherelement abgespeichertes Computerprogramm realisiert, so dass dieses mit dem Computerprogramm versehene Speicherelement in gleicher Weise die Erfindung darstellt wie das Verfahren, zu dessen Ausführung das Computerprogramm geeignet ist. Als Speicherelement kann insbesondere ein elektrisches Speichermedium zur Anwendung kommen, bspw. ein Read-Only-Memory, ein Random-Access-Memory oder ein Flash-Memory.

Die Erfindung betrifft auch ein Computerprogramm, das zur Ausführung des erfindungsgemäßen Verfahrens geeignet ist, wenn es auf einem Rechengerät eines Steuergeräts, insbesondere auf einem Mikroprozessor, abläuft. Besonders bevorzugt ist dabei, wenn das Computerprogramm auf einem Speicherelement, insbesondere auf einem Flash-Memory, abgespeichert ist.

Als eine weitere Lösung der Aufgabe der vorliegenden Erfindung wird ausgehend von dem Steuergerät der eingangs genannten Art vorgeschlagen, dass das Steuergerät Prüfmittel zur Durchführung einer Plausibilitätsprüfung von mindestens einer der Betriebsgrößen aufweist, wobei die Prüfmittel die Plausibilitätsprüfung unter Verwendung mindestens einer weiteren Betriebsgröße des Kraftfahrzeugs während des Betriebs des Kraftfahrzeugs durchführen.

Gemäß einer vorteilhaften Weiterbildung der vorliegenden Erfindung wird vorgeschlagen, dass das Steuergerät zur Steuerung und/oder Regelung einer Brennkraftmaschine des Kraftfahrzeugs in Abhängigkeit von der Geschwindigkeit des Kraftfahrzeugs dient, wobei die Prüfmittel eine Plausibilitätsprüfung eines Geschwindigkeitssignals unter Verwendung eines Drehzahlsignals der Brennkraftmaschine und eines Übersetzungsverhältnisses eines Getriebes des Kraftfahrzeugs durchführen.

Gemäß einer bevorzugten Ausführungsform der vorliegenden Erfindung wird vorgeschlagen, dass das Steuergerät die Brennkraftmaschine über Zündzeitpunkt, Zündwinkel, Kraftstoffeinspritzzeitpunkt und/oder Kraftstoffeinspritzmenge derart ansteuert, dass sich die Geschwindigkeit des Kraftfahrzeugs verringert, falls das Geschwindigkeitssignal einen vorgebbaren Schwellwert für die maximal zulässige Geschwindigkeit des Kraftfahrzeugs übersteigt.

Zeichnungen

Weitere Merkmale, Anwendungsmöglichkeiten und Vorteile der Erfindung ergeben sich aus der nachfolgenden Beschreibung von Ausführungsbeispielen der Erfindung, die in den Zeichnungen dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung. Es zeigen:

Fig. 1 ein erfindungsgemäßes Steuergerät gemäß einer bevorzugten Ausführungsform; und

Fig. 2 ein Ablaufdiagramm eines erfindungsgemäßen Verfahrens gemäß einer bevorzugten Ausführungsform.

Beschreibung der Ausführungsbeispiele

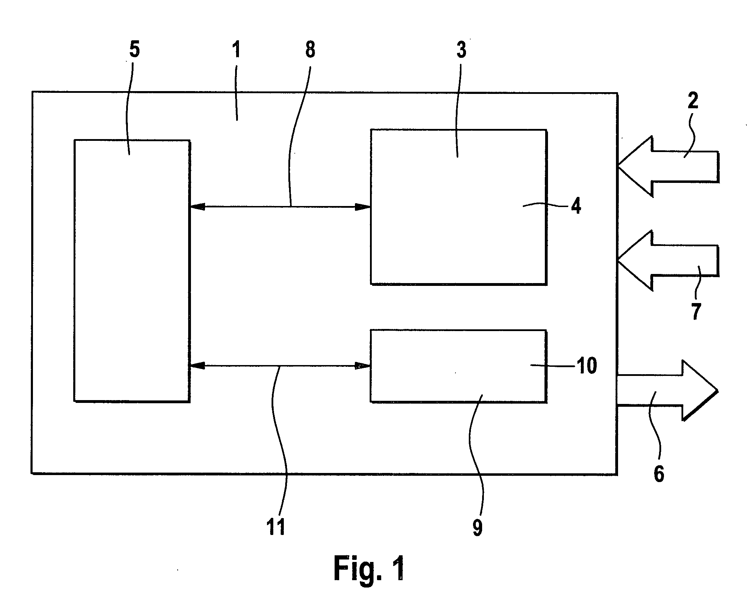

In Figur 1 ist ein Steuergerät für ein Kraftfahrzeug in seiner Gesamtheit mit dem Bezugszeichen 1 bezeichnet. Das Steuergerät 1 dient zur Steuerung und/oder Regelung von beliebigen Kraftfahrzeugfunktionen, bspw. einer Brennkraftmaschine, einem Antiblockiersystem (ABS), der Fahrdynamik des Kraftfahrzeugs, einer elektronischen Lenkung (steer-by-wire), einer elektronischen Bremse (brake-by-wire) oder beliebiger Komfortfunktionen in dem Kraftfahrzeug. Die Steuerung bzw. Regelung der Kraftfahrzeugfunktionen erfolgt in Abhängigkeit von mindestens einer Betriebsgröße 2 des Kraftfahrzeugs. Die Art der Betriebsgrößen 2 ist abhängig von der Art der gesteuerten bzw. geregelten Funktion.

Das Steuergerät 1 weist eine Speicheranordnung 3 auf, die bspw. als ein wiederbeschreibbarer Speicher, insbesondere als ein Flash-Memory, ausgebildet ist. In der Speicheranordnung 3 ist u.a. ein Steuerprogramm 4 abgespeichert. Das Steuerprogramm 4 ist auf einem Rechengerät 5, das bspw. als ein Mikroprozessor ausgebildet ist, ablauffähig. Zur Übertragung des Steuerprogramms 4 an das Rechengerät 5 ist eine Datenübertragungsverbindung 8 zwischen der Speicheranordnung 3 und dem Rechengerät 5 vorgesehen. Durch das Abarbeiten des Steuerprogramms 4 auf dem Rechengerät 5 wird die Steuerungs- bzw. Regelungsfunktion des Steuergeräts 1 realisiert. Im Rahmen der Steuerung bzw. Regelung der Funktion erzeugt das Steuergerät 1 Ansteuersignale 6 für beliebige Kraftfahrzeugkomponenten, wobei durch die Ansteuerung der Komponenten mit den Ansteuersignalen 6 die zu steuernde bzw. zu regelnde Kraftfahrzeugfunktion beeinflusst wird.

Wenn das Steuergerät 1 bspw. dazu eingesetzt wird, die Geschwindigkeit eines Kraftfahrzeugs zu überwachen, so dass diese eine maximal zulässige Höchstgeschwindigkeit nicht überschreitet, wird als Betriebsgröße ein Signal einer Geschwindigkeitsmesseinrichtung herangezogen, das Informationen über die aktuelle Geschwindigkeit $V\_ist$ des Kraftfahrzeugs enthält. Das Geschwindigkeitssignal $V\_ist$ wird in dem Steuergerät 1 mit einem dort abgelegten Schwellwert $V\_max$ für die maximal zulässige Höchstgeschwindigkeit verglichen.

Falls die aktuelle Geschwindigkeit $V\_ist$ die Höchstgeschwindigkeit $V\_max$ überschreitet, werden Ansteuersignale 6 für eine Brennkraftmaschine des Kraftfahrzeugs erzeugt. Die Ansteuersignale 6 sind bspw. der Zündzeitpunkt, der Zündwinkel, der Zeitpunkt einer Kraftstoffeinspritzung und/oder die eingespritzte Kraftstoffmenge. Wenn die Brennkraftmaschine mit den Ansteuersignalen 6 angesteuert wird, verringert sich die Geschwindigkeit $V\_ist$ des Kraftfahrzeugs. Die Ansteuerung der Brennkraftmaschine mit den Ansteuersignalen 6 erfolgt so lange bis die Geschwindigkeit $V\_ist$ wieder unterhalb der Höchstgeschwindigkeit $V\_max$ liegt.

Das Geschwindigkeitssignal $V\_ist$ kann durch unbefugte Dritte derart manipuliert werden, dass das Signal $V\_ist$ die Höchstgeschwindigkeit $V\_max$ niemals erreicht. Im einfachsten Fall kann das Geschwindigkeitssignal $V\_ist$ einfach mit 1/2 oder einem anderen Faktor kleiner 1 multipliziert werden. Unbefugte Dritte nutzen diese Manipulationsmöglichkeit, um eine Begrenzung der maximalen Höchstgeschwindigkeit eines Kraftfahrzeugs auf $V\_max$ zu umgehen. Diese Art der Manipulation ist insbesondere für leistungsstarke Kraftfahrzeuge interessant, die ab Werk bei einer vorgebbaren Höchstgeschwindigkeit $V\_max$ von bspw. 250 km/h abgeregelt werden.

Das erfindungsgemäße Verfahren verhindert eine derartige Manipulation von Betriebsgrößen 2, die einem Steuergerät 1 eines Kraftfahrzeugs zur Steuerung und/oder Regelung von Kraftfahrzeugfunktionen zugeführt werden. Die Erfindung schlägt vor, mindestens eine der Betriebsgrößen 2 unter Verwendung mindestens einer weiteren Betriebsgröße 7 des Kraftfahrzeugs während des Betriebs des Kraftfahrzeugs auf Plausibilität zu prüfen. Es werden insbesondere diejenigen Betriebsgrößen 2 geprüft, die für die Steuerung bzw. Regelung der Kraftfahrzeugfunktion herangezogen werden. Als weitere Betriebsgrößen 7 werden insbesondere solche Größen verwendet, die nicht für die Steuerung bzw. Regelung der Kraftfahrzeugfunktion herangezogen werden.

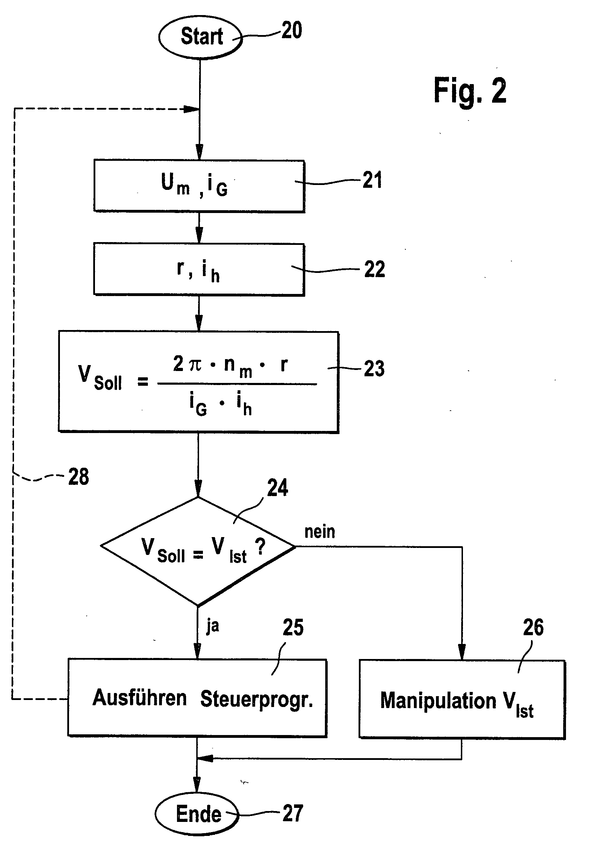

Anhand der Figur 2 wird das erfindungsgemäße Verfahren für das oben geschilderte Ausführungsbeispiel näher erläutert. Erfindungsgemäß wird das Geschwindigkeitssignal $V\_ist$ als Betreibsgröße 2 einer Plausibilitätsprüfung unterzogen. Als weitere Betriebsgrößen 7 werden dabei ein Drehzahlsignal $n\_m$ der Brennkraftmaschine des Kraftfahrzeugs und ein aktuelles Übersetzungsverhältnis $i\_G$ eines Getriebes des Kraftfahrzeugs herangezogen. Das aktuelle Übersetzungsverhältnis $i\_G$ kann bspw. anhand eines momentan eingelegten Gangs aus Applikationsdaten ermittelt werden. Es ist aber auch denkbar, dass das Übersetzungsverhältnis $i\_G$ von einem Getriebesteuergerät an das Steuergerät 1 zur Steuerung und/oder Regelung der Kraftfahrzeugfunktionen übermittelt wird. Bei einem Automatikgetriebe wird das Übersetzungsverhältnis $i\_G$ vorzugsweise unter Berücksichtigung eines Wandlerschlupfes ermittelt.

Das Verfahren beginnt in einem Funktionsblock 20. In einem Funktionsblock 21 werden die aktuellen Werte der weiteren Betriebsgrößen 7 eingelesen. In einem Funktionsblock 22 werden bestimmte Parameterwerte, die für die Plausibilitätsprüfung ebenfalls benötigt werden, eingelesen. Diese Parameterwerte sind für das jeweilige Kraftfahrzeug fest vorgegeben. Im vorliegenden Fall sind die Parameterwerte ein Radius r der an dem Kraftfahrzeug montierten Reifen und eine Achsübersetzung i_h. Ein typischer Wert für den Radius r eines Reifens ist bspw. 0,33 m. Die Achsübersetzung i_h liegt bei Serienfahrzeugen im allgemeinen zwischen 2,2 und 5,0. Im folgenden wird von einer Achsübersetzung i_h von 4,0 ausgegangen.

In einem Funktionsblock 23 wird die Geschwindigkeit V_soll des Kraftfahrzeugs in Abhängigkeit der weiteren Bezugsgrößen 7 und der Parameterwerte ermittelt. Bei einer aktuellen Motordrehzahl von 5.000 U/min und einem Übersetzungsverhältnis von 0,8 (im 5. Gang) ergibt sich:

$$V\_soll = \frac{2 \cdot \pi \cdot r \cdot n\_m}{i\_G \cdot i\_h} = \frac{2 \cdot \pi \cdot {5000}/{60} \cdot 0,33}{0,8 \cdot 4,0} = 54 \, {m}/{s} \cong 194,4 \, {km}/{h}$$

In einem Abfrageblock 24 wird überprüft, ob die ermittelte Geschwindigkeit V_soll gleich der Geschwindigkeit V_ist des eingelesenen Geschwindigkeitssignals ist. Falls ja, war die Plausibilitätsprüfung erfolgreich und das Steuerprogramm kann ganz normal mit dem Geschwindigkeitssignal V_ist ausgeführt werden (Funktionsblock 25). Die Plausibilitätsprüfung kann von Zeit zu Zeit wiederholt werden. Dazu wird von dem Funktionsblock 25 zu dem Funktionsblock 21 verzweigt (gestrichelte Linie 28). Wenn die Abarbeitung des Steuerprogramms 4 beendet ist, wird von dem Funktionsblock 25 zu einem Funktionsblock 27 verzweigt, wo das Verfahren beendet wird.

Falls die ermittelte Geschwindigkeit V_soll jedoch ungleich der Geschwindigkeit V_ist ist, war die Plausibilitätsprüfung nicht erfolgreich und es wird von einer Manipulation des Geschwindigkeitssignals V_ist ausgegangen (Funktionsblock 26). In diesem Fall werden geeignete Gegenmaßnahmen unternommen. Denkbar ist bspw. sofortiges Sperren Steuergeräts 1, Sperren des Steuergeräts 1 beim nächsten Fahrzyklus oder Ablegen einer Manipulationsinformation in einem Wartungsspeicher des Kraftfahrzeugs, der beim nächsten Werkstattaufenthalt ausgelesen wird.

Zur Ausführung des erfindungsgemäßen Verfahrens ist in einem Speicherelement 9 des Steuergeräts 1 ein Computerprogramm 10 abgelegt, das ebenfalls auf dem Rechengerät 5 ablauffähig ist. Zwischen dem Speicherelement 9 und dem Rechengerät 5 ist eine Datenübertragungsverbindung 11 vorgesehen. Das Speicherelement 9 ist vorzugsweise als ein Flash-Memory ausgebildet. Bevor die Bezugsgrößen 2 also von dem Steuerprogramm 4 zur Steuerung bzw. Regelung der Kraftfahrzeugfunktion verwendet werden, werden sie von dem Computerprogramm 10 unter Verwendung der weiteren Bezugsgrößen 7 auf Plausibilität geprüft.

**Patentansprüche**

1.   Verfahren zum Schutz eines Steuergeräts (1) eines Kraftfahrzeugs vor Manipulation, wobei das Steuergerät (1) zur Steuerung und/oder Regelung von Kraftfahrzeugfunktionen in Abhängigkeit von mindestens einer Betriebsgröße (2) des Kraftfahrzeugs eingesetzt wird und das Verfahren zum Schutz mindestens einer der Betriebsgrößen (2) vor Manipulation dient, **dadurch gekennzeichnet, dass** die mindestens eine der Betriebsgrößen (2) unter Verwendung mindestens einer weiteren Betriebsgröße (7) des Kraftfahrzeugs während des Betriebs des Kraftfahrzeugs einer Plausibilitätsprüfung unterzogen wird.

2.   Verfahren nach Anspruch 1, **dadurch gekennzeichnet, dass** ein Geschwindigkeitssignal (V_ist) unter Verwendung eines Drehzahlsignals (n_m) einer Brennkraftmaschine des Kraftfahrzeugs und eines aktuellen Übersetzungsverhältnisses (i_G) eines Getriebes des Kraftfahrzeugs während des Betriebs des Kraftfahrzeugs der Plausibilitätsprüfung unterzogen wird.

3.   Verfahren nach Anspruch 2, **dadurch gekennzeichnet, dass** das aktuelle Übersetzungsverhältnis (i_G) anhand eines momentan eingelegten Gangs des Getriebes aus Applikationsdaten ermittelt wird, in denen die Übersetzungsverhältnisse für die Gänge des Getriebes abgelegt sind.

4.   Verfahren nach Anspruch 2, **dadurch gekennzeichnet, dass** das aktuelle Übersetzungsverhältnis (i_G) von einem Getriebesteuergerät an das Steuergerät (1) zur Steuerung und/oder Regelung der Kraftfahrzeugfunktionen übermittelt wird.

5.   Verfahren nach einem der Ansprüche 1 bis 4, **dadurch gekennzeichnet, dass** das aktuelle Übersetzungsverhältnis (i_G) bei einem Automatikgetriebe unter Berücksichtigung eines Wandlerschlupfes ermittelt wird.

6. Speicherelement (9), insbesondere Read-Only-Memory, Random-Access-Memory oder Flash-Memory, für ein Steuergerät (1) eines Kraftfahrzeugs zur Steuerung und/oder Regelung von Kraftfahrzeugfunktionen, auf dem ein Computerprogramm (10) abgespeichert ist, das auf einem Rechengerät (5) des Steuergeräts (1), insbesondere auf einem Mikroprozessor, ablauffähig und zur Ausführung eines Verfahrens nach einem der Ansprüche 1 bis 5 geeignet ist.

7. Computerprogramm (10), das auf einem Rechengerät (5) eines Steuergeräts (1), insbesondere auf einem Mikroprozessor, ablauffähig ist, **dadurch gekennzeichnet, dass** das Computerprogramm (10) zur Ausführung eines Verfahrens nach einem der Ansprüche 1 bis 5 geeignet ist.

8. Computerprogramm (10) nach Anspruch 7, **dadurch gekennzeichnet, dass** das Computerprogramm (10) auf einem Speicherelement (9), insbesondere auf einem Flash-Memory, abgespeichert ist.

9. Steuergerät (1) eines Kraftfahrzeugs zur Steuerung und/oder Regelung von Kraftfahrzeugfunktionen in Abhängigkeit von mindestens einer Betriebsgröße (2) des Kraftfahrzeugs, wobei das Steuergerät (1) Mittel zum Schutz des Steuergeräts (1) vor Manipulation aufweist, **dadurch gekennzeichnet, dass** die Mittel eine Plausibilitätsprüfung von mindestens einer der Betriebsgrößen (2) unter Verwendung mindestens einer weiteren Betriebsgröße (7) des Kraftfahrzeugs während des Betriebs des Kraftfahrzeugs durchführen.

10. Steuergerät (1) nach Anspruch 9, **dadurch gekennzeichnet, dass** das Steuergerät (1) zur Steuerung und/oder Regelung einer Brennkraftmaschine des Kraftfahrzeugs in Abhängigkeit von der Geschwindigkeit des Kraftfahrzeugs dient, wobei die Prüfmittel eine Plausibilitätsprüfung eines Geschwindigkeitssignals ($V\_ist$) unter Verwendung eines Drehzahlsignals ($n\_m$) der Brennkraftmaschine und eines Übersetzungsverhältnisses ($i\_G$) eines Getriebes des Kraftfahrzeugs durchführen.

11. Steuergerät (1) nach Anspruch 10, **dadurch gekennzeichnet, dass** das Steuergerät (1) die Brennkraftmaschine über Zündzeitpunkt, Zündwinkel, Kraftstoffeinspritzzeitpunkt und/oder Kraftstoffeinspritzmenge derart ansteuert, dass sich die Geschwindigkeit des Kraftfahrzeugs verringert, falls das Geschwindigkeitssignal ($V\_ist$) einen vorgebbaren Schwellwert für die maximal zulässige Geschwindigkeit ($V\_max$) des Kraftfahrzeugs übersteigt.

Fig. 1

**Fig. 2**

Start — 20

$U_m, i_G$ — 21

$r, i_h$ — 22

$$V_{Soll} = \frac{2\pi \cdot n_m \cdot r}{i_G \cdot i_h}$$ — 23

— 28

$V_{Soll} = V_{Ist}$? — 24

nein

ja

Ausführen Steuerprogr. — 25

Manipulation $V_{Ist}$ — 26

Ende — 27